Europäisches Patentamt

European Patent Office

Office européen des brevets

(19)

(11) **EP 0 685 918 B1**

(12) **FASCICULE DE BREVET EUROPEEN**

(45) Date de publication et mention
de la délivrance du brevet:
**28.10.1998 Bulletin 1998/44**

(51) Int Cl.⁶: **H02J 1/10**, H02H 1/00

(21) Numéro de dépôt: **95401238.1**

(22) Date de dépôt: **29.05.1995**

(54) **Dispositif de synchronisation pour un système d'alimentation sécurisé**

Synchronisierungsvorrichtung für eine Stromversorgungsschutzeinrichtung

Synchronisation device for a power supply security device

(84) Etats contractants désignés:
**CH DE ES GB IT LI SE**

(30) Priorité: **31.05.1994 FR 9406604**

(43) Date de publication de la demande:
**06.12.1995 Bulletin 1995/49**

(73) Titulaire: **ALCATEL ALSTHOM COMPAGNIE
GENERALE D'ELECTRICITE**
**75008 Paris (FR)**

(72) Inventeur: **Thereze, Jean-Marie**
**F-22300 Lannion (FR)**

(74) Mandataire: **Sciaux, Edmond et al
COMPAGNIE FINANCIERE ALCATEL
Dépt. Propr. Industrielle,
30, avenue Kléber
75116 Paris (FR)**

(56) Documents cités:
**DE-A- 3 332 727**

# Description

L'invention concerne un dispositif de synchronisation pour un système d'alimentation sécurisé alimentant au moins une charge à partir d'une pluralité d'alimentations, chaque alimentation comportant un dispositif limiteur à disjonction et réarmement automatique; et comportant un dispositif de couplage pour coupler à chaque charge au moins deux des alimentations. Un tel système peut être utilisé dans de nombreux équipements électroniques tel qu'un central téléphonique ou un système informatique. Un tel équipement électronique est constitué de cartes consommatrices de courant. Un système d'alimentation classique comporte une seule liaison appelée bus d'alimentation, pour chaque tension à distribuer à toutes les cartes consommatrices. Un système d'alimentation dit sécurisé est protégé contre une défaillance d'une alimentation, par une redondance des alimentations qui le constituent : Des dispositifs de couplage permettent d'additionner les intensités fournies par les alimentations fournissant une même tension, tout en interdisant une inversion du sens du courant dans chaque alimentation.

Classiquement, chaque alimentation est protégée contre une surcharge au moyen d'un limiteur qui limite l'intensité débitée par cette alimentation à la valeur maximale que peut supporter cette alimentation. On distingue deux types de limiteur de courant :

- des limiteurs qui se comportent comme des régulateurs de courant dès que l'intensité atteint une valeur maximale prédéterminée;
- et des limiteurs à disjonction, qui coupent le circuit dès que l'intensité atteint une valeur maximale prédéterminée, même si ce n'est qu'une surintensité passagère.

Parmi les limiteurs à disjonction on distingue deux catégories :

- Ceux à réarmement automatique.
- Ceux à réarmement par un opérateur.

Les premiers présentent un inconvénient lorsque plusieurs alimentations sont reliées en parallèle et que l'intensité totale consommée par les charges est supérieure à l'intensité maximale que peut fournir une seule alimentation : si les limiteurs ne se réarment pas tous au même instant, le courant ne se répartit pas de manière égale dans tous les limiteurs. Celui qui se réarme en premier disjoncte, puis les autres risquent de disjoncter en cascade.

Les seconds présentent un autre inconvénient : Une fois que le limiteur a ouvert le circuit, il est nécessaire qu'un opérateur intervienne pour réarmer le limiteur.

Pour éviter ces inconvénients, la solution classique consiste à utiliser, pour un système d'alimentation sécurisé, des limiteurs qui régulent le courant à une valeur maximale, au lieu de couper le circuit. Il est alors nécessaire de prévoir des dissipateurs de chaleur adaptés à la puissance dissipée dans les limiteurs lorsqu'ils régulent le courant à sa valeur maximale. Ces dissipateurs ont pour inconvénient d'être coûteux et encombrants.

Le but de l'invention est de permettre l'utilisation de limiteurs à disjonction et réarmement automatique, dans un système d'alimentation sécurisé, pour éviter l'utilisation de dissipateurs coûteux et encombrants.

L'objet de l'invention est un dispositif de synchronisation pour un système d'alimentation sécurisé alimentant au moins une charge à partir d'une pluralité d'alimentations, chaque alimentation comportant un dispositif limiteur à disjonction et réarmement automatique, qui disjoncte lorsqu'il est parcouru par une intensité supérieure à une valeur prédéterminée; et comportant un dispositif de couplage pour coupler à chaque charge au moins deux des alimentations;

caractérisé en ce qu'il comporte une liaison de synchronisation reliant entre eux tous les limiteurs de toutes les alimentations;

en ce que chaque limiteur comporte des moyens de synchronisation reliés à cette liaison de synchronisation, et qui réarment ce limiteur lorsqu'ils reçoivent un signal de synchronisation transmis sur la liaison de synchronisation;
et en ce qu'il comporte au moins un générateur de signal de synchronisation relié à la liaison de synchronisation.

Le dispositif ainsi caractérisé démarre sans problème, que ce soit lors de la mise sous tension ou lors d'un réarmement automatique après la disparition d'une surintensité passagère, parce que les moyens de synchronisation réarment chaque limiteur à un même instant qui est défini par un signal de synchronisation distribué par la liaison de synchronisation.

Selon un premier mode de réalisation, les moyens de synchronisation de chaque alimentation comportent un générateur pour émettre un signal de synchronisation périodiquement et indépendamment dans chaque limiteur, ces générateurs émettant tous en parallèle sur la liaison de synchronisation.

Selon un autre mode de réalisation, le dispositif selon l'invention comporte un générateur de signal de synchronisation, qui est unique et commun à l'ensemble des alimentations. Il possède une sortie reliée à la liaison de synchronisation pour distribuer le signal de synchronisation à tous les limiteurs.

L'invention sera mieux comprise et d'autres caractéristiques apparaîtront à l'aide de la description ci-dessous et des figures l'accompagnant :

- la figure 1 représente le schéma synoptique d'un exemple de système d'alimentation sécurisé comportant un exemple de réalisation du dispositif de synchronisation selon l'invention;

- la figure 2 représente le schéma synoptique d'une première variante de réalisation des moyens de synchronisation d'une alimentation de l'exemple représenté sur la figure 1;
- et la figure 3 représente le schéma synoptique d'une seconde variante de réalisation de ces moyens de synchronisation.

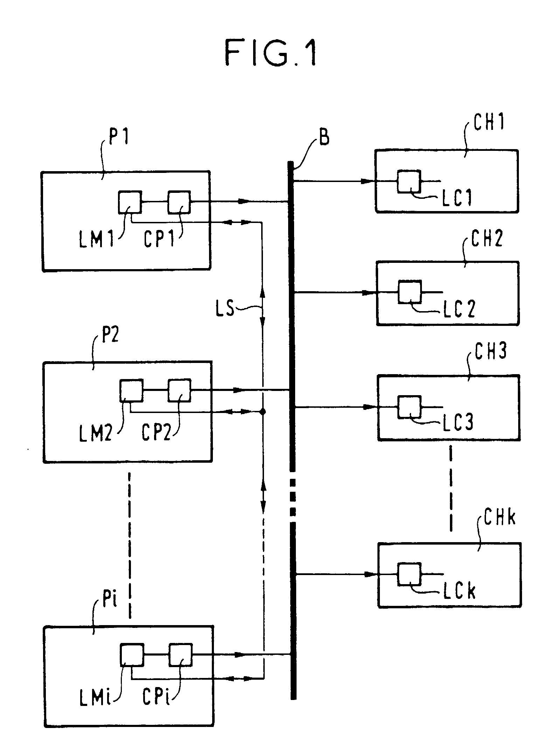

Le système représenté sur la figure 1 alimente k charges qui sont constituées par des cartes électroniques CH1, CH2, CH3, ..., CHk. Il comporte une pluralité d'alimentations P1,...,Pi fournissant une même tension à l'ensemble des cartes, via un bus de puissance, B. Chaque alimentation P1,...,Pi comporte un limiteur de courant, référencé respectivement LM1, ..., LMi; et est reliée en parallèle avec les alimentations homologues grâce à un coupleur CP1,...,CPi. Les limiteurs LM1, LM2, ..., LMi ont chacun une entrée-sortie reliée à une ligne de synchronisation LS.

Le courant fourni par l'alimentation P1 traverse d'abord le limiteur LM1 qui limite l'intensité fournie à la valeur maximale que peut débiter l'alimentation P1. Puis il traverse le coupleur CP1 dont une sortie est reliée au bus B. Il en est de même dans les autres alimentations. Chacune des cartes CH1, ..., CHk comporte un limiteur, respectivement LC1, ..., LCk qui limite le courant consommé par la carte à une valeur prédéterminée en fonction des composants électronique que comporte cette carte, et qui est très inférieure à l'intensité maximale que peut débiter l'une des alimentation P1,...,Pi.

Classiquement, les alimentations P1,...,Pi sont capables de fournir la même intensité maximale et celle-ci est égale à $\frac{1}{i-1}$ fois l'intensité totale qui est consommée par l'ensemble des cartes CH1, ..., CHk, pour qu'en cas de défaillance de l'une des alimentations, les i-1 alimentations restantes puissent la secourir. Les dispositifs de couplage CP1,...,CPi sont constitués classiquement d'une diode ou bien d'un transistor MOS associé à un circuit de commande qui bloque ce transistor lorsque le courant tend à s'inverser dans l'alimentation.

Les limiteurs LM1,..., LMi, et les limiteurs LC1, ..., LCk sont constitués classiquement d'un transistor, d'une résistance de faible valeur, et d'un circuit de commande. Le transistor et la résistance sont parcourus par le courant débité, la résistance étant utilisée pour mesurer le courant débité. Dans un système selon l'invention, les limiteurs LM1, ..., LMi sont du type à disjonction, pour éviter le problème de dissipation mentionné précédemment, et à réarmement automatique, pour éviter l'intervention d'un opérateur.

Il se pose alors un problème lors de la mise sous-tension ou lors d'un réarmement automatique après la disparition d'une surintensité passagère, parce que l'intensité consommée par l'ensemble des cartes CH1, ..., CHk est généralement supérieure à l'intensité maximale que peut fournir une seule des alimentations P1, ..., Pi: si les limiteurs LM1, ..., LMi ne se réarment pas tous au même instant, le courant ne se répartit pas de manière égale dans tous les limiteurs, celui qui démarre en premier disjoncte, puis les autres risquent de disjoncter en cascade.

Le dispositif selon l'invention permet de synchroniser le démarrage des limiteurs au moyen d'une ligne de synchronisation LS qui relie entre eux tous les limiteurs LM1, ..., LMi de toutes alimentations P1, ..., Pi , et par des moyens de synchronisation incorporés dans chaque limiteur LM1, ..., LMi.

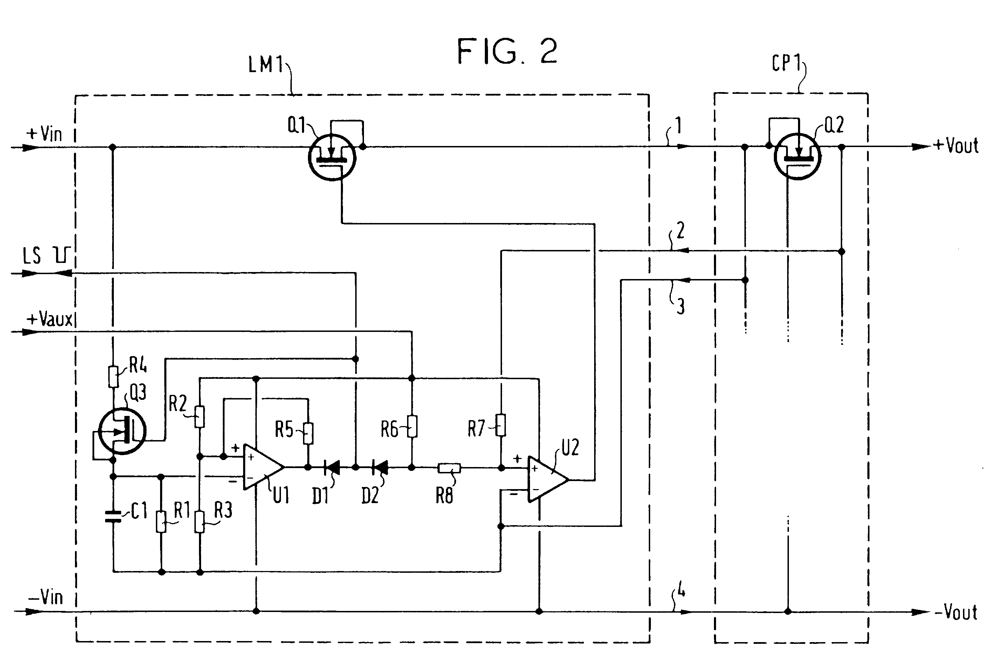

La figure 2 représente le schéma synoptique d'une première variante de réalisation du limiteur LM1, par exemple. Le schéma synoptique du coupleur CP1 est représenté partiellement. Il comporte un transistor MOS Q2 qui est utilisé comme commutateur pour le couplage, et comme une résistance pour mesurer l'intensité du courant débité. La réalisation de ce coupleur CP1 est à la portée de l'Homme de l'Art.

Le limiteur LM1 comporte essentiellement :

- un transistor MOS Q1 qui est utilisé comme un commutateur, sa résistance interne étant très faible lorsque le limiteur est en régime de fonctionnement normal, et ayant une valeur pratiquement infinie lorsque le limiteur a disjoncté;
- un amplificateur opérationnel U2, associé à des résistances R6, R7, R8 pour constituer un comparateur commandant le blocage du transistor Q1 lorsque l'intensité débitée dépasse une valeur de seuil prédéterminée;
- un amplificateur opérationnel U1, et un transistor MOS Q3, associés avec des résistances R1, R2, R3, R4, R5, et un condensateur C1, pour constituer un multivibrateur astable;
- et deux diodes D1, D2 permettent de coupler le multivibrateur, le comparateur, et la ligne de synchronisation LS.

Les transistors Q1, Q2, Q3, sont du type MOS à déplétion, et canal N.

Le limiteur LM1 comporte en outre :

- une entrée recevant une tension +Vin et étant reliée au drain de Q1;
- une entrée recevant une tension auxiliaire +Vaux, supérieure à la tension +Vin;
- une entrée recevant une tension -Vin,
- une entrée de synchronisation reliée à la ligne LS de synchronisation;
- une entrée 2 et une entrée 3 reliées respectivement en aval et en amont du transistor Q2 du dispositif de couplage CP1 pour mesurer la chute de tension entre le drain et la source de ce transistor, cette chute de tension étant représentative de l'intensité débitée;
- une sortie 1 qui fournit la tension +Vin, moins une petite chute de tension creée par le transistor Q1, cette sortie 1 étant reliée à la source du transistor Q1;
- et une sortie 4 transmettant la tension -Vin sans modification.

La source de Q2 est reliée à la sortie 1. Le drain de Q2 fournit une tension +Vout égale à +Vin moins les petites chutes de tension dans les transistors Q1 et Q2. Une entrée du coupleur CP1 est reliée à la sortie 4 pour recevoir la tension-Vin. Une sortie du coupleur CP1 fournit, à une ligne de masse du système, une tension -Vout égale à la tension -Vin.

Le drain du transistor Q1 est relié à l'entrée recevant la tension +Vin. La source du transistor Q1 est reliée à la sortie 1. La grille du transistor Q1 est reliée à la sortie de l'amplificateur opérationnel U2. L'entrée inversante de l'amplificateur opérationnel U2 est reliée à l'entrée 3. L'entrée non inversante de l'amplificateur opérationnel U2 est reliée à une borne commune des résistances R7 et R8, l'autre borne de la résistance R7 étant reliée à l'entrée 2. L'amplificateur U2 est alimenté par la tension +Vaux et par la tension -Vin. Les résistances R6 et R8 ont une borne commune qui est reliée à l'anode de la diode D2, alors que l'autre borne de la résistance R6 est reliée à la tension +Vaux.

L'amplificateur opérationnel U1 comporte :

- deux entrées d'alimentation reliées respectivement à la tension +Vaux et à la tension -Vin;
- une sortie reliée à la cathode de la diode D1 et à une première borne de la résistance R5, l'anode de la diode D1 étant reliée : à la cathode de la diode D2, à la ligne de synchronisation LS, et à la grille du transistor Q3;
- une entrée non inversante reliée : à la seconde borne de la résistance R5, à une première borne de la résistance R2, et à une première borne de la résistance R3;
- et une entrée inversante reliée : à la source du transistor Q3, à une première borne du condensateur C1, et à une première borne de la résistance R1.

La seconde borne de la résistance R2 est reliée à la tension +Vaux. Les secondes bornes du condensateur C1, de la résistance R1, et de la résistance R3 sont reliées à l'entrée 3 qui reçoit la tension prélevée en amont du transistor Q2. Le drain du transistor Q3 est relié à la tension +Vin par une résistance R4.

En régime de fonctionnement normal, le transistor Q1 est passant et provoque une très faible chute de tension. La diode D2 est bloquée car une tension égale à +Vin est présente sur la ligne de synchronisation LS. L'amplificateur opérationnel U2 compare la tension en amont du transistor Q2, et une tension fournie par le pont de résistance R6, R8, R7 qui fournit une tension égale à la somme d'une fraction de la tension +Vout en aval du transistor Q2 et d'une fraction de la tension fixée +Vaux. Les valeurs des résistances R6, R7, R8 sont choisies telles que lorsque l'intensité maximale tolérable est atteinte, il y a égalité entre la tension appliquée à l'entrée non inversante et la tension appliquée à l'entrée inversante. Au delà de cette intensité maximale, la sortie de l'amplificateur U2 passe d'un niveau haut à un niveau intermédiaire assurant un courant constant dans le transistor Q1. En effet l'amplificateur U2 polarise le transistor Q1 de telle manière que la chute de tension produite par ce courant dans Q2, décalée par le pont R6, R8, R7, produise sur l'entrée non inversante de l'amplificateur U2 une tension égale à celle présente sur l'entrée inversante.

La tension apparaissant aux bornes de Q1 charge le condensateur C1 par l'intermédiaire de la résistance R4 et du transistor Q3 qui est saturé. La durée de cette charge est déterminée par la constante de temps définie par R4, R1, et C1; ainsi que par la tension aux bornes de Q1. Lorsque la tension aux bornes de C1 atteint la tension présente sur l'entrée non inversante de l'amplificateur U1, la sortie de celui-ci passe brutalement du niveau intermédiaire au niveau bas. La résistance R5 introduit un hystérésis qui verrouille ce changement d'état. Le niveau bas fourni par la sortie de l'amplificateur U1 est alors appliqué par la diode D2 sur l'entrée non inversante de l'amplificateur U2, ce qui a pour effet de faire passer sa sortie du niveau intermédiaire à un niveau bas qui bloque complètement le transistor Q1.

Ce niveau bas en sortie de l'amplificateur U1 est aussi transmis aux autres limiteurs par la ligne de synchronisation LS. Il a pour effet de bloquer tous les transistors homologues de Q1, et donc de provoquer la coupure totale du courant fourni par l'alimentation. Ce niveau bas a aussi pour effet de bloquer le transistor Q3 par application d'un niveau bas sur sa grille. Alors le condensateur C1 se décharge à travers la résistance R1.

L'amplificateur U2 est verrouillé jusqu'à ce qu'un niveau bas, voisin de -Vout, soit appliqué sur la cathode de la diode D2. Ce niveau bas peut être appliqué soit par la ligne de synchronisation LS, soit par le multivibrateur du limiteur LCij, ce multivibrateur émettant périodiquement une impulsion au niveau bas.

Le condensateur C1 se décharge. Au bout d'un certain temps la tension qu'il applique à l'entrée inversante de l'amplificateur Q1 devient inférieure à la tension qu'il applique à l'entrée non inversante par les résistances R2, R3, R5. La sortie de l'amplificateur U1 repasse alors brutalement au niveau haut, et ce changement est appliqué à la ligne de synchronisation LS et à la grille du transistor Q3 pour le débloquer.

Lorsque la borne commune aux diodes D3 et D4 passe au niveau bas, que ce soit à cause du multivibrateur local, ou à cause d'un autre multivibrateur situé dans un autre limiteur du courant, il en résulte un forçage de la tension appliquée à l'entrée non inversante de l'amplificateur U2. Ce forçage a pour effet de faire basculer le comparateur constitué par l'amplificateur U2, et donc de réarmer le limiteur.

Lorsque la ligne de synchronisation remonte à l'état haut, tous les amplificateurs homologues à U2 sont autorisés à remettre en conduction le transistor Q1. Si la surcharge est encore présente, l'amplificateur U2 limitera à nouveau le courant dans Q1 et un nouveau cycle de disjonction et réarmement recommencera. Si la surcharge a disparu, tous les transistors homologues de Q1 se remettront en conduction au moment de la remontée de la ligne de synchronisation et ce réarmement simultané permettra le redémarrage de l'ensemble du système.

Lors d'un surintensité passagère, c'est le circuit limiteur dont le condensateur C1 aura atteint en premier le seuil de décision qui commande le réarmement des autres au moyen de la ligne de synchronisation LS. Ainsi la dispersion sur les composants R1, R2, R3, R4, R5, C1, U1 n'affecte en rien la synchronisation du réarmement de tous les limiteurs.

Il est à remarquer que la ligne de synchronisation LS peut être utilisée aussi pour télécommander une mise à l'arrêt de toutes les cartes électroniques alimentées par le système d'alimentation, en imposant par un moyen quelconque un niveau bas sur cette ligne de synchronisation LS.

La mesure de l'intensité du courant débité pourrait être faite au moyen d'une résistance classique, au lieu d'utiliser le transistor Q2 du dispositif de couplage.

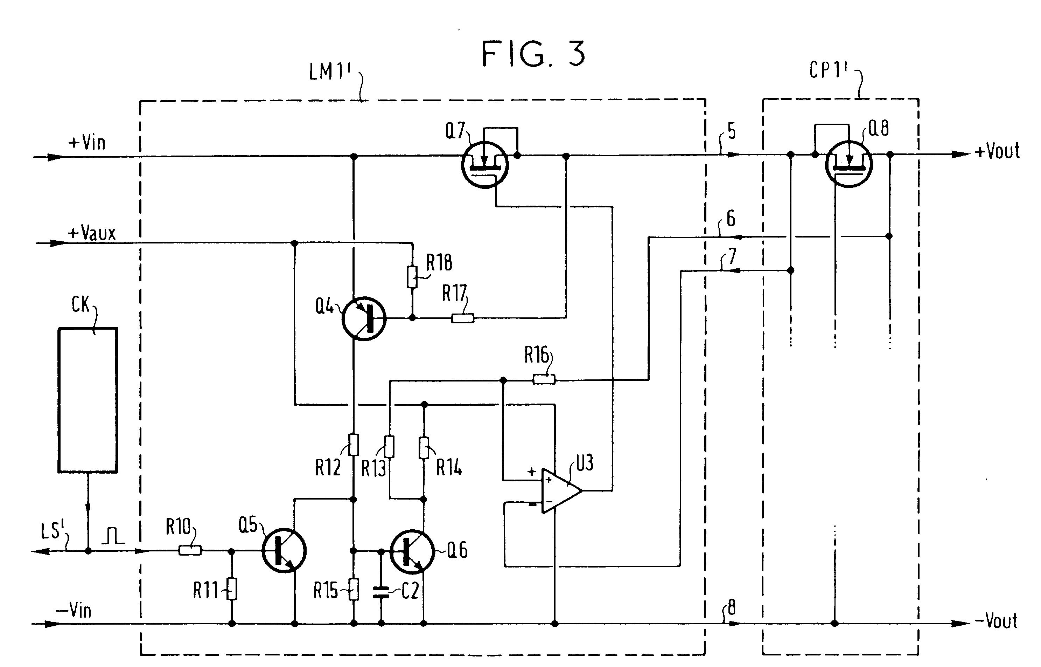

La figure 3 représente le schéma synoptique d'une seconde variante de réalisation, LM1', du limiteur de l'alimentation P1. Dans cette seconde variante, tous les limiteurs sont reliés en parallèle à une ligne de synchronisation, LS', qui est reliée à une horloge CK fournissant périodiquement une impulsion au niveau haut, pour permettre un réarmement simultané de tous les limiteurs lors du démarrage du système ou après la disparition d'une surintensité passagère. La figure 3 représente partiellement le dispositif de couplage associé CP1'. Ce dernier comporte un transistor MOS Q8 dont la résistance interne à l'état passant est utilisée pour mesurer l'intensité débitée. Le reste du dispositif de couplage CP1' n'est pas représenté, car il n'intervient pas dans le fonctionnement du limiteur LM1'. D'autre part, sa réalisation est à la portée de l'Homme de l'Art.

Le limiteur LM1' comporte essentiellement :

- un transistor MOS Q7 utilisé comme un commutateur, sa résistance interne ayant une valeur très faible lorsque le limiteur est en régime de fonctionnement normal, et ayant une valeur pratiquement infinie lorsque le limiteur a disjoncté;
- un amplificateur opérationnel U3 associé à deux résistances R13 et R16 pour constituer un comparateur commandant le transistor Q7, pour le bloquer lorsque l'intensité débitée dépasse une valeur de seuil prédéterminée;
- un multivibrateur bistable constitué de trois transistors bipolaires Q4, Q5, Q6, et de résistances R12, R14, R15, R17, R18.

Le limiteur LM1' comporte en outre:

- une entrée recevant une tension +Vin;
- une entrée recevant une tension auxiliaire +Vaux;
- une entrée reliée à une ligne de synchronisation pour recevoir un signal d'horloge de synchronisation;
- une entrée recevant une tension -Vin,
- une sortie 5 fournissant une tension égale à +Vin moins une petite chute de tension produite par le transistor Q7;
- une sortie 8 transmettant sans modification la tension -Vin;
- et deux entrées, 6 et 7, reliées respectivement en aval et en amont du transistor Q8 du dispositif de couplage CP1', pour mesurer une tension repésentative de l'intensité débitée.

Le coupleur CP1' restitue une tension +Vout égale à la tension fournie par la sortie 5, moins une petite chute de tension dans le transistor Q8. Il restitue, d'autre part, une tension -Vout égale à -Vin.

Les transistors Q7 et Q8 sont du type MOS à dépletion et à canal N. Le transistor Q4 est un transistor bipolaire PNP. Les transistors Q5 et Q6 sont des transistors bipolaires NPN.

Le drain du transistor Q7 est relié à l'entrée recevant la tension +Vin. Sa source est reliée à la sortie 5. Sa grille est reliée à la sortie de l'amplificateur opérationnel U3. L'amplificateur U3 comporte deux entrées d'alimentation reliées respectivement à l'entrée recevant la tension +Vaux et à l'entrée recevant la tension -Vin. Il comporte en outre : une entrée inversante reliée à l'entrée 7, et une entrée non inversante reliée à une borne commune aux résistances R13 et R16, la seconde borne de la résistance R16 étant reliée à l'entrée 6. La seconde borne de la résistance R13 est reliée au collecteur du transistor Q6. L'émetteur du transistor Q6 est relié à l'entrée recevant la tension -Vin. Son collecteur est relié en outre à la tension +Vaux par une résistance R14.

En régime normal, ce transistor Q6 est saturé, en l'absence de signal de synchronisation, par conséquent son collecteur est à une tension voisine de -Vin. Les résistances R13 et R16 constituent un pont diviseur qui applique à l'entrée non inversante de l'amplificateur U3 une fraction de la tension prélevée en aval du transistor Q8. Par ailleurs, l'entrée inversante de l'amplificateur U3 reçoit la tension qui est prélevée en amont du transistor Q8. Les valeurs des résistances R13 et R16 sont choisies telles que lorsque l'intensité débitée atteint la valeur maximale tolérable, la tension sur la borne commune de R13 et R16 est égale à la tension en amont du transistor Q8.

Ainsi, si l'intensité débitée dépasse la valeur maximale tolérable, la sortie de l'amplificateur U3 passe d'un niveau haut à un niveau intermédiaire assurant un courant constant dans le transistor Q7. En effet l'amplificateur U3 polarise le transistor Q7 de telle manière que la chute de tension produite par ce courant dans Q8, décalée par le pont R16, R13, R14, produise sur l'entrée non inversante de l'amplificateur U3 une tension égale à celle présente sur l'entrée inversante. Si la chute de tension aux bornes de Q7 dépasse le seuil créé par le seuil de conduction de la jonction émetteur-base de Q4 et les résistances R17 et R18, le transistor Q4 entre en conduction.

Cet état est verrouillé au moyen du multivibrateur bistable constitué par les transistors Q4 et Q6. L'émetteur du transistor Q4 est relié à l'entrée recevant la tension +Vin. Son collecteur est relié à une première borne d'une résistance R12. Sa base est reliée à un point commun des résistances R17 et R18. Les secondes bornes des résistances R17 et R18 sont reliées respectivement à la source du transistor Q7 et à l'entrée recevant la tension +Vaux. La seconde borne de la résistance R12 est reliée à la base du transistor Q6 et à une première borne de la résistance R15. La seconde borne de la résistance R15 est reliée à l'entrée recevant la tension -Vin. Le collecteur du transistor Q6 est relié d'une part à la seconde borne de la résistance R13 déjà mentionnée, et d'autre part à une première borne de la résistance R14, la seconde borne de la résistance R14 étant reliée à la tension +Vaux.

En régime normal, le transistor Q4 est bloqué. Lorsque le limiteur disjoncte, la tension en aval du transistor Q7 descend et devient égale à -Vin. Par conséquent la résistance R17 provoque la conduction du transistor Q4. Le courant transmis par Q4 débloque alors le transistor Q6. La tension du collecteur du transistor Q6 diminuant, la tension ramenée à l'entrée inversante de l'amplificateur U3 par le pont R13, R16, diminue et verrouille l'état de l'amplificateur U3. Ce dernier fournit un niveau bas qui bloque le transistor Q7, tant qu'il n'y a pas de réarmement.

Il est prévu un condensateur C2 entre la base du transistor Q6 et l'entrée recevant la tension -Vin afin d'éviter que le multivibrateur bistable puisse changer d'état, et confirmer un blocage du transistor Q7, lors d'une surintensité ayant un durée très faible et qui est donc inoffensive.

Le réarmement du limiteur LM1' est assuré par le transistor Q5 ayant son collecteur relié à la base du transistor Q6 et son émetteur relié à l'entrée recevant la tension -Vin. Sa base est reliée à l'entrée recevant le signal de synchronisation par une résistance R10, et à l'entrée recevant la tension -Vin par la résistance R11. Le signal de synchronisation est constitué d'impulsions périodiques à un niveau haut voisin de +Vin qui rend conducteur le transistor Q5 pour dériver le courant fourni par le transistor Q4. Le transistor Q6 se bloque alors La tension fournie par le pont R13, R14, R16 reprend une valeur supérieure à la tension -Vin qui est appliquée à l'entrée inversante. L'amplificateur U3 change donc d'état. Sa sortie fournit un niveau haut qui débloque le transistor Q7. A la fin de l'impulsion du signal de synchronsiation, le transistor Q7 reste dans cet état passant s'il n'y a pas de surintensité encore présente.

La portée de l'invention n'est pas limitée au cas où chaque alimentation ne comporte qu'un seul limiteur. Elle s'applique de la même manière dans tous les cas où une même charge est alimentée via au moins deux limiteurs couplés en parallèle, et si ces limiteurs sont du type à disjonction et réarmement automatique.

## Revendications

1. Dispositif de synchronisation pour un système d'alimentation sécurisé alimentant au moins une charge (CH1, ..., CHk) à partir d'une pluralité d'alimentations (P1, ..., Pi), chaque alimentation comportant un dispositif limiteur (LM1, ..., LMi) à disjonction et réarmement automatique, qui disjoncte lorsqu'il est parcouru par une intensité supérieure à une valeur prédéterminée; et comportant un dispositif de couplage (CP1, ..., Cpi) pour coupler à chaque charge au moins deux des alimentations;
   caractérisé en ce qu'il comporte une liaison de synchronisation (LS) reliant entre eux tous les limiteurs (LM1, ..., LMi) de toutes les alimentations;

   en ce que chaque limiteur (LM1, ..., LMi) comporte des moyens de synchronisation (Q3, U1; Q5) reliés à cette liaison de synchronisation, et qui réarment ce limiteur lorsqu'ils reçoivent un signal de synchronisation transmis sur la liaison de synchronisation (LS);
   et en ce qu'il comporte au moins un générateur (C1, U1, Q3; CK) fournissant un signal de synchronisation relié à la liaison de synchronisation (LS).

2. Dispositif selon la revendication 1 caractérisé en ce que les moyens de synchronisation de chaque alimentation comportent un générateur (C1, U1, Q3) pour émettre un signal de synchronisation périodiquement et indépendamment dans chaque limiteur, ces générateurs émettant tous en parallèle sur la liaison de synchronisation (LS).

3. Dispositif selon la revendication 1, caractérisé en ce qu'il comporte un seul générateur (CK) de signal de synchronisation, commun à l'ensemble des alimentations, et ayant une sortie reliée à la liaison de synchronisation (LS).

## Claims

1. Synchronisation device for a redundant power supply system supplying power to at least one load (CH1, ..., CHk) from a plurality of power supply units (P1, ..., Pi) each including a tripping current limiter device (LM1, ..., LMi) which is reset automatically, which trips out when the current flowing through it is greater than a predetermined value; and including a coupling device (CP1, ..., CPi) for coupling at least two of the power supply units to each load;

characterised in that it includes a synchronisation link (LS) interconnecting all the current limiters (LM1, ..., LMi) of all the power supply units;

in that each current limiter (LM1, ..., LMi) includes synchronisation means (Q3, U1; Q5) connected to said synchronisation link and which reset said current limiter in response to receiving a synchronisation signal transmitted on the synchronisation link (LS);

and in that it includes at least one generator (C1, U1, Q3; CK) supplying a synchronisation signal and connected to the synchronisation link (LS).

2. Device according to claim 1 characterised in that the synchronisation means of each power supply unit include a generator (C1, U1, Q3) for sending a synchronisation signal periodically and independently for each current limiter, said generators all sending in parallel on the synchronisation link (LS).

3. Device according to claim 1 characterised in that it includes a single synchronisation signal generator (CK) common to all the power supply units and having an output connected to the synchronisation link (LS).

**Patentansprüche**

1. Synchronisationsvorrichtung für ein abgesichertes Versorgungssystem, das wenigstens eine Last (CH1, ... CHk) aus einer Mehrzahl von Versorgungen (P1, ... Pi) versorgt, wobei jede Versorgung eine Begrenzungsvorrichtung (LM1, ... LMi) mit Unterbrechung und automatischer Rückstellung umfaßt, die unterbricht, wenn sie von einer einen vorgegebenen Wert überschreitenden Stromstärke durchflossen wird, und die eine Kopplungsvorrichtung (CP1, ... CPi) umfaßt, um an jede Last wenigstens zwei der Versorgungen zu koppeln; dadurch gekennzeichnet, daß sie eine Synchronisationsverbindung (LS) umfaßt, die alle Begrenzer (LM1, ... LMi) aller Versorgungen miteinander verbindet;

das jeder Begrenzer (LM1, ... LMi) Synchronisationsmittel (Q3, U1; Q5) umfaßt, die mit dieser Synchronisationsverbindung verbunden sind und die den Begrenzer rückstellen, wenn sie ein auf der Synchronisationsverbindung (LS) übertragenes Synchronisationssignal empfangen;

und daß sie wenigstens einen Erzeuger (C1, U1, Q3; CK) umfaßt, der ein Synchronisationssignal liefert, angeschlossen an die Synchronisationsverbindung (LS).

2. Vorrichtung nach Anspruch 1, dadurch gekennzeichnet, daß die Synchronisationsmittel jeder Versorgung einen Erzeuger (C1, U1, Q3) zum periodischen und unabhängigen Senden eines Synchronisationssignals in jedem Begrenzer umfassen, wobei diese Erzeuger sämtlich parallel auf der Synchronisationsverbindung (LS) senden.

3. Vorrichtung nach Anspruch 1, dadurch gekennzeichnet, daß sie einen einzigen Synchronisationssignalerzeuger (CK) umfaßt, der sämtlichen Versorgungen gemeinsam ist und einen mit der Synchronisationsverbindung (LS) verbundenen Ausgang umfaßt.

# FIG.1

# FIG. 2

LM1

CP1

+Vin

Q1

1

+Vout

Q2

LS

2

+Vaux

3

R4

Q3

R2

R5

R6

R7

U2

U1

D1

D2

R8

C1

R1

R3

−Vin

4

−Vout

EP 0 685 918 B1

FIG. 3

EP 0 685 918 B1